# EUROPÄISCHE PATENTANMELDUNG

(11) **EP 2 543 243 A1**
(43) Veröffentlichungstag der Anmeldung: **09.01.2013**
(21) Anmeldenummer: 12175147.3
(22) Anmeldetag: 05.07.2012
(51) Int. Cl.: A01D 33/14

(54) **Rodeaggregat zum Roden von Wurzelfrüchten**

(30) Priorität: 08.07.2011 DE 102011051667
(71) Anmelder: Franz Kleine Vertriebs & Engineering GmbH, 33154 Salzkotten (DE)
(72) Erfinder: Schulte, Reinhold, 33106 Paderborn (DE); Wortmann, Oliver, 59757 Arnsberg (DE)
(74) Vertreter: Rehberg Hüppe + Partner

(57) **Zusammenfassung**

Die vorliegende Erfindung betrifft ein Rodeaggregat (16) zum Roden von Wurzelfrüchten, insbesondere Zuckerrüben. Das Rodeaggregat (16) verfügt über einen mindestens ein Schar (17) tragenden Scharträger (26) sowie einen Aktuator (14), über welchen eine Schartiefe (18) des Schars (17) verstellbar ist. Erfindungsgemäß erfolgt über einen einzigen Aktuator (14) sowohl eine Verstellung der Schartiefe (18) als auch eines Scharwinkels (19) entsprechend einer konstruktiv vorgegebenen Charakteristik. Diese Charakteristik wird insbesondere herbeigeführt durch einen Mehrgelenktrieb, bei welchem eine Schwinge (24) kürzer ausgebildet sein kann als eine Pendelstütze (28). Erfindungsgemäß kann somit der Scharwinkel (19) individuell an die jeweilige Schartiefe (18) angepasst werden.

## Beschreibung

### TECHNISCHES GEBIET DER ERFINDUNG

Bei einem Roden von Wurzelfrüchten wie Zuckerrüben erfolgt mittels eines Ernte- oder Rodefahrzeugs ein Köpfen der Wurzelfrüchte, beispielsweise mittels Messern und/oder Schlägeln, ein anschließendes Ausheben der Wurzelfrüchte aus dem Boden mittels eines Rodeaggregats, ein Transport der Wurzelfrüchte, eine Reinigung der Wurzelfrüchte und eine temporäre Bevorratung der Wurzelfrüchte in einem Bunker. Die vorliegende Erfindung betrifft ein bspw. in diesem Zusammenhang einsetzbares Rodeaggregat.

### STAND DER TECHNIK

DE 199 49 644 B4 offenbart ein Rode- oder Erntefahrzeug, an welchem an einem quer zur Fahrtrichtung orientierten Balken mehrere Rodeaggregate gehalten sind. Die Rodeaggregate sind jeweils nebeneinanderliegenden Reihen der zu rodenden Wurzelfrüchte zugeordnet. Der Balken mit den hieran gehaltenen Rodeaggregaten kann über einen Ausleger mit Stellzylinder bedarfsgerecht angehoben und abgesenkt werden. Die Rodeaggregate verfügen jeweils über einen sich in Fahrtrichtung vor dem Balken erstreckenden Tragarm, der über eine vertikale Führung mit dem Balken gekoppelt ist. Mittels eines doppelt wirkenden Hydraulikzylinders kann ein Absenken und Anheben des Tragarms relativ zu dem Balken erfolgen. In dem von der vertikalen Führung in Fahrtrichtung vorgeordneten Endbereich ist an dem Tragarm ein Lenker pendelnd um eine horizontale Querachse angelenkt. In dem dem Tragarm gegenüberliegenden Endbereich ist an dem Lenker ein Tastrad um eine horizontale Querachse drehbar gelagert. Das Tastrad liegt auf dem Boden auf und wälzt auf diesem ab, wobei der pendelartig an dem Tragarm angelenkte Lenker entgegen der Fahrtrichtung ausgelenkt ist. Für Unebenheiten des Boden ergibt sich für jedes Rodeaggregat individuell eine Veränderung des jeweiligen pendelartigen Winkels zwischen dem Lenker und dem Tragarm. Dieser Winkel wird jeweils gemessen durch einen nach dem Potentiometerprinzip arbeitenden Winkelgeber, dessen Ausgangssignal einer jedem Rodeaggregat zugeordneten Steuereinheit zugeführt wird. Die Steuereinheit steuert die hydraulische Beaufschlagung des doppelt wirkenden Hydraulikzylinders zum Anheben und Absenken des Tragarms individuell je nach den mit dem Tastrad erfassten Unebenheiten des Bodens im Bereich des Rodeaggregats. Ebenfalls an dem Tragarm gelagert ist drehbar ein mit einem doppelarmigen Hebel ausgebildeter Scharträger. Die gelenkige Verbindung zwischen Tragarm und Scharträger erfolgt zwischen der vertikalen Führung und der Anlenkung des dem Tastrad zugeordneten Lenkers. Der dem Boden zugewandte Arm des Scharträgers bildet in seinem Endbereich ein Schar aus, während der andere Arm des Scharträgers über eine Pleuelstange mit einem Exzenterantrieb gekoppelt ist. Mittels des Exzenterantriebs werden zwei Scharträger jedes Moduls zu gegenläufigen Schwenkbewegungen um die Lagerachse der Scharträger an dem Tragarm angetrieben. Stellt der Winkelgeber (mittelbar über das Anheben des Tastrads mit einer hiermit einhergehenden Winkeländerung) eine zu große Tiefe des Eindringens des Schars in den Boden fest, kann automatisiert durch die Steuereinheit und den hierdurch angesteuerten doppelt wirkenden Hydraulikzylinder ein Anheben des Tastarms erfolgen. Umgekehrt kann mit Feststellen eines Unterschreitens eines Sollwerts für die Tiefe des Eindringens des Schars in den Boden der Tragarm entsprechend abgesenkt werden. Der Winkelgeber, die Steuereinheit und der doppelt wirkende Hydraulikzylinder sind Bestandteile eines geschlossenen Regelkreises. Alternativ zu der Linearführung mit doppelt wirkendem Hydraulikzylinder zur Kopplung des Tragarms mit dem Balken schlägt das Patent auch vor, den Tragarm mittels zweier Lenker in Ausbildung als Parallelogramm-Führung an den Balken anzukoppeln, wobei in diesem Fall der doppelt wirkende Hydraulikzylinder diagonal zwischen zwei Eck- und Gelenkpunkten der Parallelogramm-Führung wirkt. Die Rodeaggregate verfügen über in die Hydraulikleitung zu den doppelt wirkenden Hydraulikzylindern angeordnete hydraulische Speicher, die ein federndes Anheben des Tragarms in der Linearführung oder Parallelogramm-Führung ermöglichen, wenn das Schar auf ein Hindernis, beispielsweise auf einen größeren Stein im Boden, trifft, so dass das Schar mit Scharträger nach oben ausweichen kann. Eine weitere Ausführungsform des Patents offenbart die Abstützung einer Tastrolle einerseits sowie eines Schars andererseits jeweils über einzelne Tragarme, die in einem gemeinsamen Gelenk pendelartig an einem Zwischenträger angelenkt sind, welcher wiederum an dem Balken abgestützt sind. Hier erfolgt eine Höhenverstellung über einen Hydraulikzylinder, der zwischen den Zwischenträger und den mit dem Schar gekoppelten Tragarm zwischengeordnet ist. In zusammenfassender Würdigung basieren die aus dem Patent bekannten Ausführungsformen darauf, dass über einen Aktuator in Ausbildung als doppelt wirkenden Hydraulikzylinder eine Schartiefe veränderbar ist, während mittels eines Exzenterantriebs eine gegenläufige Bewegung der Schare eines Paars erzeugt wird, im Zuge welcher sich geringfügig ein Scharwinkel und eine Schartiefe verändern kann.

DE 10 2004 041 970 B4 offenbart eine Rübenerntemaschine, bei welcher eine mehrere Rodeaggregate mit jeweils einem Paar von Scharen lagernde Traverse über zwei verschwenkbare Tragarme an Seitenwänden gelagert ist. An der Traverse sind in jedem Rodeaggregat unter Zwischenordnung von zwei Schwingen unter Bildung eines Gelenkvierecks mit parallelogrammartiger Anordnung der Gelenke zwei Scharträger mit endseitig angeordneten, durch den Boden geführten Scharen aufgehängt. Über einen hydraulischen Stellzylinder kann eine Verstellung des Gelenkvierecks herbeigeführt werden, die eine Veränderung der Schartiefe zur Folge hat. Um eine gleichläufige oder gegenläufige Pendelbewegung der Scharträger zu erzeugen, werden diese zwischen den Scharen und dem Gelenk über eine Schwinge oszillierend angetrieben, was in dem dem Scharträger abgewandten Ende der Schwinge durch einen Exzenterantrieb erfolgt. Über einen hydraulischen Stellzylinder kann die Traverse angehoben und abgesenkt werden, was zu einer gemeinsamen Veränderung der Tiefe des Eindringens der Schare sämtlicher Rodeaggregate führt. Mittels der jeweils den Rodeaggregaten zugeordneten, genannten beiden Schwingen und dem zugeordneten hydraulischen Stellzylinder kann zusätzlich individuell für jedes Rodeaggregat ein Anheben gegenüber der durch die Traverse vorgegebenen Schartiefe erfolgen. Wenn das Schar auf ein Hindernis wie einen Stein trifft, kann entgegen der Wirkung einer Druckfeder oder eines Hydraulikzylinders ein Anheben erfolgen, was unabhängig von den genannten Stellzylindern der Schare und der Scharträger ist. Nach dem Passieren des Hindernisses trägt die Druckfeder oder der Hydraulikzylinder dafür Sorge, dass die mittels der Traverse vorgegebene Tiefe des Eindringens der Schare wiederhergestellt wird. Anpassungen an Unebenheiten des Bodens erfolgen über Tasträder, welche im Bereich der Seitenwände drehbar gelagert sind und bei der Vorwärtsbewegung der Rübenerntemaschine auf dem Boden abrollen. Das Patent offenbart eine weitere Ausführungsform, bei welcher an mehreren Traversen Rodeaggregate gehalten sind, wobei für die den unterschiedlichen Traversen zugeordneten Rodeaggregate unterschiedliche Schartiefen einstellbar sind.

DE 10 2005 050 491 B4 offenbart eine Erntemaschine mit einem über einen hydraulischen Zylinder heb- und senkbaren Ausleger, an welchem ein Schlegleraggregat und Rodeaggregate mit Tasträdern gehalten sind. Die Tasträder dienen hier neben der Steuerung oder Regelung der Schartiefe der Rodeaggregate durch geeignete Ansteuerung eines Hydraulikzylinders auch der Höheneinstellung des Schlegleraggregats. Auch hier erfolgt die Abstützung der Schare über eine mechanische Druckfeder. Zur Entlastung der Tasträder von dem relativ hohen Gewicht des Schlegleraggregats werden Hydraulikzylinder so angesteuert, dass diese während des normalen Rodebetriebs im wesentlichen nur als das Gewicht des Schlegleraggregats zumindest teilweise aufnehmende und damit die Tasträder entlastende hydraulische Federelemente wirken. Hierfür sind in hydraulische Verbindungen zu den Hydraulikzylindern hydraulische Puffer- oder Federelemente vorgesehen. Die Tasträder sind über einen Hydraulikmotor angetrieben mit einer Antriebsgeschwindigkeit, welche größer ist als die Fahrgeschwindigkeit, so dass sich zwischen den Tasträdern und dem Boden ein Schlupf ergibt, welcher einen Selbstreinigungseffekt für die Tasträder zur Folge hat mit einer Vermeidung eines Anhaftens von Bodenmaterial an den Tasträdern.

DE 10 2006 057 782 A1 offenbart ein Rodeaggregat, bei welchem ein Scharträger über Paare von Hebeln und Lenkern unter Ausbildung eines Gelenkvierecks gehalten ist. Das Heben und Senken des Scharträgers erfolgt auch hier mittels eines doppelt wirkenden Hydraulikzylinders, welcher zwischen einem Querträger und einer Verbindungsachse des Paars der Hebel wirkt. In den Zylinderräumen des doppelt wirkenden Hydraulikzylinders sind elektrische Drucksensoren angeordnet, deren elektrisches Messsignal einer elektronischen Steuereinrichtung zugeführt wird. Zur Durchführung des Rodebetriebs mit einem möglichst geringen Kraft- und Leistungsaufwand erfolgt eine individuelle Regelung der Schartiefe der Schare für jedes Rodeaggregat. An den Enden des Querträgers sind zwei angetriebene Tasträder vorgesehen. Eine Höhenverstellung der Tasträder gegenüber dem Querträger erfolgt über Hydraulikzylinder. Für die Regelung der Schartiefen erfolgt zunächst über die Tasträder eine Einstellung des Querträgers auf ein Mittel- oder Ausgangsniveau. Im einfachsten Fall wird dies dadurch erreicht, dass die auf dem Ackerboden aufstehenden Tasträder den Tragbalken auf dem gewünschten Niveau abstützen, wobei dieses Niveau durch den Hydraulikzylinder eingestellt wird. Möglich ist auch, dass das Ausgangsniveau des Querträgers gesteuert durch die Tasträder mit einer das Rodeaggregat mit dem Erntefahrzeug verbindenden Hubeinrichtung geregelt wird, wobei die Tasträder dann entlastet oder weitestgehend entlastet auf der Oberseite des Ackerbodens beim Roden laufen. Hierbei besteht dann die Möglichkeit, den Druck in mindestens einer Kammer des als Hydraulikzylinders ausgebildeten Stellglieds als Kriterium für die Einstellung und Regelung des Ausgangsniveaus des Querträgers zu verwenden. Ausgehend von diesem Mittel-oder Ausgangsniveau des Querträgers erfolgt dann für jedes Rodeaggregat individuell die Einstellung der Schartiefe der Schare in Abhängigkeit von dem Ausgangssignal der Drucksensoren, also von dem Hydraulikdruck in den Hydraulikzylindern. Hierbei wird davon ausgegangen, dass der Hydraulikdruck eine Funktion der Belastung der Schare bzw. der Scharträger und damit der Schartiefe ist, und zwar unter Berücksichtigung weiterer Parameter wie beispielsweise der aktuellen Eigenschaft und Beschaffenheit des Ackerbodens, der Rodegeschwindigkeit usw. Unter Berücksichtigung dieser Parameter ergibt sich für die jeweils gewünschte Schartiefe eine bestimmte auf den jeweiligen Scharträger einwirkende Kraft und daraus resultiert ein bestimmter Hydraulikdruck als ein der jeweils erforderlichen Schartiefe entsprechender Sollwert. Unterschreitet der Hydraulikdruck einen Sollwert, wird dies als Indiz für eine zu geringe Schartiefe angesehen, so dass die Hydraulikzylinder im Sinne eines Absenkens der Schare des betreffenden Rodeaggregats angesteuert werden können (und umgekehrt). Hierbei kann eine einzige Steuereinrichtung für sämtliche Rodeaggregate oder eine Gruppe von Rodeaggregaten vorgesehen sein, wobei die Steuerung in einem so genannten Multiplexverfahren zeitlich nacheinander erfolgen kann. Vorgeschlagen wird auch, anstelle von Hydraulikzylindern als Stellglieder pneumatisch betätigte Stellglieder, beispielsweise Pneumatikzylinder oder elektrisch betätigte Stellglieder wie Elektro- oder Spindelmotoren, einzusetzen. Die Einstellung oder Regelung der Schartiefe der Schare der Rodeaggregate erfolgt unter Verwendung jeweils eines Regelkreises, der zusätzlich zu den Drucksensoren oder zu anderen Drücke, Kräfte oder Momente messenden Sensoren die elektronische Steuereinheit aufweist. Im einfachsten Fall kann eine Einstellung der Schartiefe auch durch einstellbare ÜberdruckVentile im Hydraulik-System, beispielsweise in einer Hydraulikverbindung zwischen den beiden Kammern des jeweiligen Hydraulikzylinders, realisiert sein.

### AUFGABE DER ERFINDUNG

Der Erfindung liegt die Aufgabe zugrunde, ein Rodeaggregat hinsichtlich des
- Rode-, Schar- oder Pflugverhaltens,
- Steuer- oder Regelungsaufwands und/oder
- Bauaufwands für die Beeinflussung der Schartiefe und des Scharwinkels
zu verbessern.

### LÖSUNG

Die Aufgabe der Erfindung wird erfindungsgemäß mit den Merkmalen des unabhängigen Patentanspruchs gelöst. Weitere Ausgestaltungen der Erfindung ergeben sich aus den abhängigen Patentansprüchen.

### BESCHREIBUNG DER ERFINDUNG

Die vorliegende Erfindung beruht zunächst auf der Erkenntnis, dass eine verbesserte Funktion des Rodeaggregats herbeigeführt werden kann, wenn mit einer Veränderung der Schartiefe (in mindestens einem Teil-Stellbereich oder für den gesamten Stellbereich der Schartiefe während des Betriebs der Schare) auch eine Veränderung des Scharwinkels erfolgt. Lediglich beispielhaft kann dies auf folgende Mechanismen zurückgeführt werden:
- Vereinfacht gesagt pflügt das Paar der Schare entsprechend einem V durch den Boden, wobei die Erstreckungsebene des V unter einem spitzen Winkel gegenüber dem Boden geneigt ist. Die beiden Schenkel des V öffnen sich in Fahrtrichtung, wodurch eine Art "Einfangen" der Wurzelfrüchte bei nicht exakter Ausrichtung des V zu der Reihe der Wurzelfrüchte erfolgen kann und/oder eine Querverschiebung der Scharträger zur automatisierten Ausrichtung zu den Reihen der Wurzelfrüchte erfolgen kann. Für eine geringe Schartiefe treten die vorderen Endbereiche der Schenkel des V aus dem Boden aus, so dass ohne diese Endbereich nur ein "verkleinertes V" für das Einfangen oder automatisierte Zentrieren im Boden genutzt werden kann, wodurch die Funktion des Rodeaggregats beeinträchtigt ist. Diesem Effekt kann entgegengewirkt werden, indem für kleine Schartiefen der Scharwinkel verringert ist, so dass gewährleistet ist, dass die V-förmigen Schare zumindest über einen Großteil der Breite oder die gesamte Breite mit den gesamten Schenkeln des V zur Wirkung kommen.
- Ebenfalls festgestellt werden kann, dass mit zunehmender Schartiefe die von dem Boden auf die Schare ausgeübte Kraft zunimmt. Ursache hierfür ist insbesondere eine zunehmende Bodenverdichtung oder -verhärtung mit zunehmender Tiefe. Darüber hinaus kann selbst für den Fall, dass sich die Schare für kleine Scharwinkel mit der gesamten Breite des V durch den Boden bewegen, ein vertikaler Teilbereich der Schare außerhalb des Bodens angeordnet sein, so dass für unterschiedliche Schartiefen ein unterschiedlicher Querschnitt des Bodens von den Scharen durchpflügt wird. Über eine Veränderung des Scharwinkel mit einer Veränderung der Schartiefe kann auch eine Beeinflussung der auf das Schar und den Scharträger ausgeübten Kräfte bewirkt werden.
- Weiterhin erfordert unter Umständen das optimale Ausheben einer Wurzelfrucht aus unterschiedlichen Tiefen einen unterschiedlichen Scharwinkel, welche auch unterschiedliche Hebegeschwindigkeiten des Bodens und der Wurzelfrucht in Abhängigkeit eines zurückgelegten Fahrweges bedingen.

Die Erfindung schlägt vor, dass die Schartiefe und ein Scharwinkel über eine Charakteristik zwischen Scharwinkel und Schartiefe veränderbar ist, wodurch obigen Erkenntnis und/oder auch anderen Sachverhalten Rechnung getragen sein kann. Hierbei setzt die Erfindung nicht zwei Aktuatoren ein, über welche separat Scharwinkel und Schartiefe verändert werden, was bereits per se einen großen apparativen Aufwand erfordern würde und zusätzlich eine unter Umständen komplizierte Regelung für die Koordination der Ansteuerung der beiden Aktuatoren erfordern würde. Vielmehr erfolgt die Veränderung der Schartiefe und des Scharwinkels entsprechend der Charakteristik durch einen einzigen Aktuator, was zu einer Verbesserung der Bauraumverhältnisse, zur Verringerung des apparativen Aufwands und zu einer vereinfachten Steuerung oder Regelung führen kann. Hierbei wird dann die Charakteristik zwischen Scharwinkel und Schartiefe konstruktiv vorgegeben, was eine besonders einfache Realisierung dieser Charakteristik darstellt.

Während für den eingangs genannten Stand der Technik als unerwünschter Nebeneffekt der genannten konstruktiven Kopplungen zwischen den Scharträgern und Aktuatoren auch eine Betätigung eines Aktuators zur Veränderung der Schartiefe eine sehr geringfügige, unerwünschte Veränderung des Scharwinkels nach sich ziehen kann, führt die Erfindung gezielt in größerem Ausmaß eine Veränderung des Scharwinkels mit einer Veränderung einer Schartiefe herbei: Erfindungsgemäß ist die konstruktiv vorgegebene Charakteristik derart gewählt, dass sich (in mindestens einem Teil-Stellbereich oder in dem gesamten während des Betriebs der Schare nutzbaren Stellbereich für eine Veränderung der Schartiefe) mit einer Veränderung einer Schartiefe um einen Millimeter zumindest eine Veränderung des Scharwinkels um 0,015° ergibt. Hierbei kann die Veränderung des Scharwinkels in Abhängigkeit der Veränderung der Schartiefe einen beliebigen Verlauf haben. Um lediglich einige Beispiele zu nennen, kann dieser Verlauf geradlinig sein, kurvenförmig sein, Knicke oder Sprünge aufweisen u. ä. Um lediglich ein einfaches Beispiel zu nennen, ergibt sich mit einem geradlinigen Verlauf und einer Veränderung des Scharwinkels um 0,02° bei Veränderung der Schartiefe um einen Millimeter für einen Stellbereich oder Teil-Stellbereich der Schartiefe von 100 Millimeter eine Veränderung des Scharwinkels von 2°. Es versteht sich, dass oberhalb des genannten veränderten Scharwinkels von 0,015° mit Veränderung der Schartiefe um einen Millimeter auch beliebige größere Veränderungen des Scharwinkels für die Veränderung der Schartiefe um einen Millimeter möglich sind.

Unter Umständen kann den oben dargelegten Gegebenheiten für die Anforderungen des Scharwinkels in Abhängigkeit von der Schartiefe besonders gut Rechnung getragen werden, wenn die Veränderung des Scharwinkels in Abhängigkeit einer Veränderung der Schartiefe für größere Schartiefen kleiner ist als für kleinere Schartiefen. Anders gesagt verläuft die Charakteristik für den Scharwinkel als Funktion der Schartiefe für größere Schartiefen flacher als für kleinere Schartiefen.

DE 10 2004 041 970 B4 offenbart eine Ausführungsform, bei welcher zwei Aktuatoren Einsatz finden, nämlich ein erster Aktuator, über welchen Koppelstangen und mit diesen gemeinsam mehrere Scharkörper bewegt werden können, sowie einen zweiten Aktuator, über welchen die Scharkörper individuell verstellt werden können, was insbesondere für unebene Rübenfelder und Hanglagen als vorteilhaft beschrieben wird. Ein Endbereich des zweiten Aktuators ist an dem Rahmen des Rodeaggregats abgestützt, während an dem anderen Endbereich des zweiten Aktuators eine Kurbel angelenkt ist, welche wiederum mit dem Scharkörper verbunden ist. Diese Ausgestaltung des Stands der Technik hat zur Folge, dass auch ohne Beaufschlagung des zweiten Aktuators eine Beaufschlagung des ersten Aktuators eine Verschwenkung der Kurbel zur Folge hat, wodurch sich eine komplexe Betätigungskinematik mit einer unter Umständen komplizierten Steuerung oder Regelung der beiden Aktuatoren ergibt. Erfindungsgemäß ist ein Endbereich des Aktuators in einem Gelenk an einem Ausleger angelenkt, während der andere Endbereich des Aktuators an einem Gelenk einer Kurbel angelenkt ist. Die Kurbel ist starr mit einem Drehachskörper gekoppelt, der um eine Drehachse verdrehbar an dem Ausleger gelagert ist. Anders gesagt sind sowohl der erste Endbereich des Aktuators als auch die Kurbel und der Drehachskörper an dem Ausleger drehbar gelagert, so dass der Drehwinkel der Kurbel lediglich von der Beaufschlagung des Aktuators abhängig ist.

Gemäß einer weiteren Ausgestaltung der Erfindung hat in dem Stellbereich eine Veränderung einer Schartiefe um einen Millimeter eine maximale Veränderung des Scharwinkels zur Folge, die zumindest 0,15° beträgt. Auch möglich ist, dass in dem Stellbereich die gesamte Veränderung des Scharwinkels größer als 4° ist.

Für die konstruktive Ausgestaltung zur Vorgabe der Charakteristik zwischen Scharwinkel und Schartiefe bei einer Betätigung durch lediglich einen einzigen Aktuator gibt es vielfältige, beliebige Möglichkeiten, sofern mittels einer Kinematik oder eines Getriebes, eines Gelenktriebs, eines Gelenkvierecks u. ä. eine entsprechende Abhängigkeit zwischen Scharwinkel und Schartiefe erzeugt wird. Für eine besondere Ausgestaltung der Erfindung wird diese Charakteristik konstruktiv herbeigeführt durch den Einsatz einer über den Aktuator verdrehbaren Schwinge, wobei die Verdrehung unmittelbar oder mittelbar über den Aktuator herbeigeführt sein kann. Des Weiteren ist ein Scharträger verdrehbar in einem Gelenk an der Schwinge angelenkt. Schließlich ist eine Pendelstütze eingesetzt, die zwischen dem Gelenk und den Scharen an dem Scharträger angelenkt ist. Hierbei wird unter einer Pendelstütze eine Art Pleuelstange verstanden, welche lediglich in ihren Endbereichen mit Kräften beaufschlagt ist, jedoch nicht mit Momenten. Durchaus möglich ist, dass diese Pendelstütze, vergleichbar zu der Ausführungsform, wie diese beispielsweise in DE 10 2004 041 970 B4 beschrieben ist, oszillierend angetrieben ist, insbesondere über einen Exzenterantrieb, um eine gleich- oder gegenläufige oszillierende zusätzliche Bewegung der beiden Schare eines Paars von Scharen hervorzurufen. Für die erfindungsgemäße Ausgestaltung sind die über den Aktuator verdrehbare Schwinge, der Scharträger und die Pendelstütze vorzugsweise nicht in der Art eines Viergelenktriebs in Parallelogramm-Anordnung der Gelenke angeordnet, wobei die Charakteristik zwischen Scharwinkel und Schartiefe durch die Wahl der Gelenkpunkte des Viergelenktriebs konstruktiv vorgegeben werden kann.

Die in dem Stellbereich des Viergelenktriebs durchlaufenden absoluten und relativen Winkel der beteiligten Bauelemente können beliebig sein. In einer Ausführungsform der Erfindung ändert sich der Neigungswinkel der Pendelstütze gegenüber der Schwinge über den Stellbereich um mehr als 15°, insbesondere um mehr als 18°.

In bevorzugter Ausgestaltung ist die Länge der Pendelstütze mehr als doppelt so groß wie die Länge der Schwinge, wodurch die konstruktiv vorgegebene Charakteristik zwischen Scharwinkel und Schartiefe beeinflusst ist. Während grundsätzlich beliebige Veränderungen des Scharwinkels über die Schartiefe herbeiführbar sind, erfolgt für eine besondere Ausgestaltung der Erfindung über den Stellweg eine Veränderung des Scharwinkels zwischen 24° und 29°, wobei innerhalb des Stellwegs auch durchaus kleinere oder größere Scharwinkel erreicht werden können.

Grundsätzlich möglich ist, dass eine spezifische Schartiefe und ein Scharwinkel je nach Betätigung des Aktuators fest vorgegeben sind. Entsprechend dem eingangs genannten Stand der Technik kann aber in dem Rodeaggregat ein zusätzlicher federbeaufschlagter Freiheitsgrad für die Schare vorgesehen sein, der insbesondere genutzt wird, wenn das Schar auf ein Hindernis wie einen Stein trifft. Für eine Ausgestaltung der Erfindung ist für über den Aktuator vorgegebene Schartiefe und Scharwinkel die Schartiefe unter Beaufschlagung eines Federelements in Abhängigkeit von einem Scharwiderstand veränderbar.

Von der Erfindung umfasst ist eine Ausgestaltung, bei welcher die Charakteristik zwischen Scharwinkel und Schartiefe fest und unveränderbar vorgegeben ist. Durchaus möglich ist aber auch, dass die konstruktiv vorgegebene Charakteristik zwischen Scharwinkel und Schartiefe einstellbar und veränderbar ist, wodurch insbesondere unterschiedlichen Wurzelfrüchten, unterschiedlichen Fahrgeschwindigkeiten, unterschiedlichen Scharen und/oder unterschiedlichen Bodenbeschaffenheiten Rechnung getragen werden kann. Diese Einstellbarkeit kann beliebig sein. Um lediglich ein Beispiel zu nennen, können die Längen der an dem Viergelenktrieb eingesetzten Bauelemente oder können die Lagerorte des Viergelenktriebs veränderbar sein. Möglich ist, dass die Veränderung manuell durch eine einstellbare, teleskopartige Ausgestaltung einer Pleuelstange, eine Langloch-Verbindung, die Anordnung eines Gelenks an einem verdrehbar und verrast- oder regelbaren Nocken u. ä. herbeigeführt werden. Ebenfalls denkbar ist, dass die Einstellung der Charakteristik über einen hierfür zusätzlich vorgesehenen Aktuator erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Schar oder einem Scharträger die Rede ist, ist dies so zu verstehen, dass genau ein Schar oder ein Scharträger, zwei Schare oder Scharträger oder mehr Schare oder Scharträger vorhanden sind. Wenn hingegen nur die genaue Anzahl eines Merkmals angegeben werden soll, findet das Adjektiv "genau" vor dem jeweiligen Merkmal Verwendung. Oder es wird von einem "einzigen Aktuator" gesprochen, wovon nicht zwei Aktuatoren zu dem in diesem Zusammenhang genannten Zweck gemeint sein sollen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Erntefahrzeug, in welchem mindestens ein erfindungsgemäßes Rodeaggregat Einsatz finden kann, in einer Teil-Seitenansicht.
- **Fig. 2**: zeigt in einer Seitenansicht ein schematisiertes Rodeaggregat in seiner Einbauumgebung.
- **Fig. 3**: zeigt in einer Seitenansicht ein erfindungsgemäßes Rodeaggregat in vereinfachter Seitenansicht.
- **Fig. 4**: zeigt ein Rodeaggregat gemäß Fig. 3 mit zusätzlichem federbeaufschlagtem Freiheitsgrad zur Ermöglichung einer Ausweichbewegung bei Auftreffen des Schars auf ein Hindernis.
- **Fig. 5 bis 7**: zeigen ein erfindungsgemäßes Rodeaggregat für unterschiedliche Schartiefen und hieraus resultierende Scharwinkel.

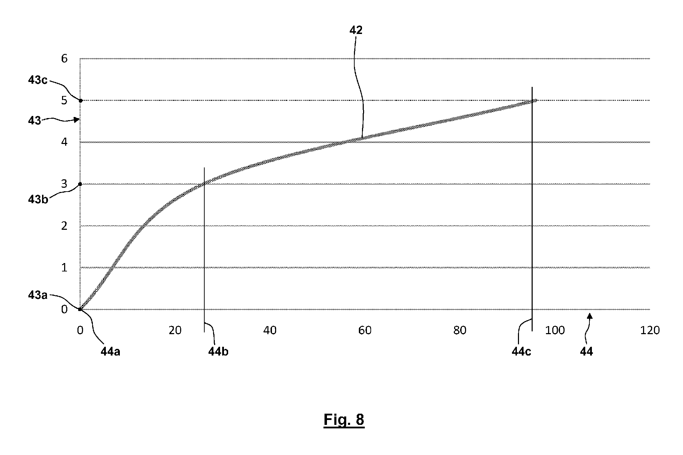

- **Fig. 8**: zeigt eine Charakteristik für die Abhängigkeit eines Scharwinkels von einer Schartiefe.

### FIGURENBESCHREIBUNG

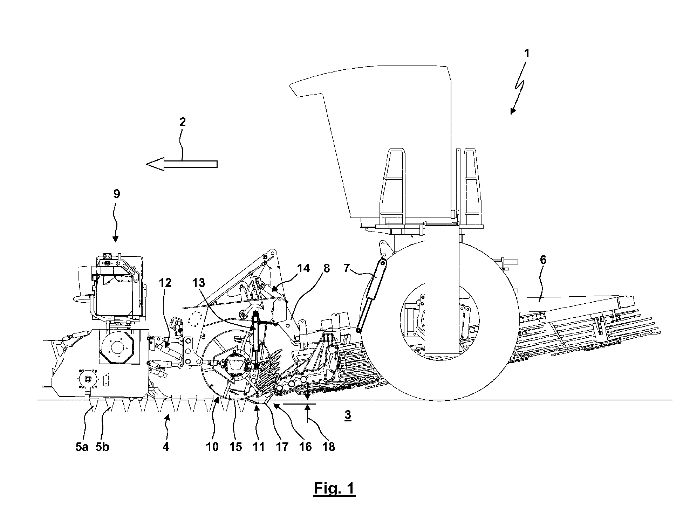

**Fig. 1** zeigt ein Erntefahrzeug 1, welches sich in eine Fahrtrichtung 2 über einen landwirtschaftlichen Boden 3 bewegt. In dem Boden 3 sind Bodenfrüchten 5a, 5b, ..., insbesondere Rüben, in Reihen 4 angebaut. Das Erntefahrzeug verfügt über einen Grundkörper 6, an welchem über einen Arbeitszylinder 7 verschwenkbar ein Ausleger 8 gehalten ist. An dem Ausleger 8 wiederum gehalten sind eine Köpfeinheit 9, eine Tastradeinheit 10 und eine Rodeeinheit 11. Mittels einer Verstellung der Höhe des Auslegers 8 über den Arbeitszylinder 7 kann auch gemeinsam die Höhe der Köpfeinheit 9, der Tastradeinheit 10 und der Rodeeinheit 11 verändert werden. Über Aktuatoren 12, 13, 14 kann individuell eine Veränderung der relativen Höhe der Köpfeinheit 9, der Tastradeinheit 10 und der Rodeeinheit 11 entsprechend der Steuerung oder Regelung der Aktuatoren 12, 13, 14 durch ein oder mehrere Steuereinheit(en) erfolgen. Möglich ist, wie dies auch mit im eingangs erläuterten Stand der Technik offenbart ist, dass die Tastradeinheit 10 und die Rodeeinheit 11 als integrale Einheit oder mit mehreren integralen Einheiten ausgebildet sind.

Im Bereich der Köpfeinheit 9 werden die Bodenfrüchte 5 mittels Messern und/oder Schlegeln wie dargestellt geköpft. Die Tastradeinheit 10 dient der Erfassung von Unebenheiten des Bodens 3, wobei dieser u. U. auch mehrere Tasträder 15 zugeordnet sind, welche die Bodenkontur jeweils im Bereich einer Reihe 4 der Bodenfrüchte 5 erfassen. Je nach erfasstem Höhensignal des jeweiligen Tastrads 15 erfolgt insbesondere eine veränderte Beaufschlagung der Aktuatoren 12, 14 zur Anpassung der Arbeitshöhe der Köpfeinheit 9 und/oder der Rodeinheit 11. Hinsichtlich der Ausgestaltung der Tasträder 15, der Tastradeinheit 10, der Erzeugung eines Niveausignals mittels der Tasträder 15, der Verarbeitung, der Ansteuerung der Aktuatoren 12, 14, der Ermittlung einer Ausgangslage entsprechend der Beaufschlagung des Aktuators 13 und der Zuordnung einer Tastradeinheit 10 mit Tasträdern 15 zu einem Rodeaggregat 16 der Rodeeinheit 11 wird auf die bekannten Ausführungsformen, insbesondere entsprechend dem eingangs genannten Stand der Technik und/oder entsprechend der am selben Tag mit der vorliegenden Patentanmeldung eingereichten Patentanmeldung der Anmelderin mit dem Titel "*Rodeaggregat zum Roden von Wurzelfrüchten*", verwiesen.

Die Rodeeinheit 11 besitzt mehrere Rodeaggregate 16, welche jeweils mindestens ein Paar von Scharen 17 besitzen, die mit einer Schartiefe 18 und einem Scharwinkel 19 in Fahrtrichtung 2 durch den Boden 3 geführt werden. Die Schare 17 eines Paars von Scharen bilden eine in erster Näherung V-förmige Öffnung, welche sich entgegen der Fahrtrichtung 2 verjüngt. In diese Öffnung treten Bodenfrüchte 5 der zugeordneten Reihe 4 ein, wodurch eine Zentrierwirkung erzeugt wird, wobei auch eine Ausgleichsbewegung erfolgen kann, wenn die Schare 17 ggf. mit zugeordnetem Scharträger, einen transversalen, unter Umständen federbeaufschlagten Freiheitsgrad besitzen. Mit zunehmenden Eintritt der Bodenfrüchte 5 in die Öffnung der Schare 17 wird die Bodenfrucht 5 aus dem Boden gelöst und angehoben. Hinter den Scharen 17 werden die Bodenfrüchte weiter verarbeitet, beispielsweise mittels eines nachgeordneten Querförderers, einer Reinigungseinheit und einer Zuführeinheit zu einem Bunker.

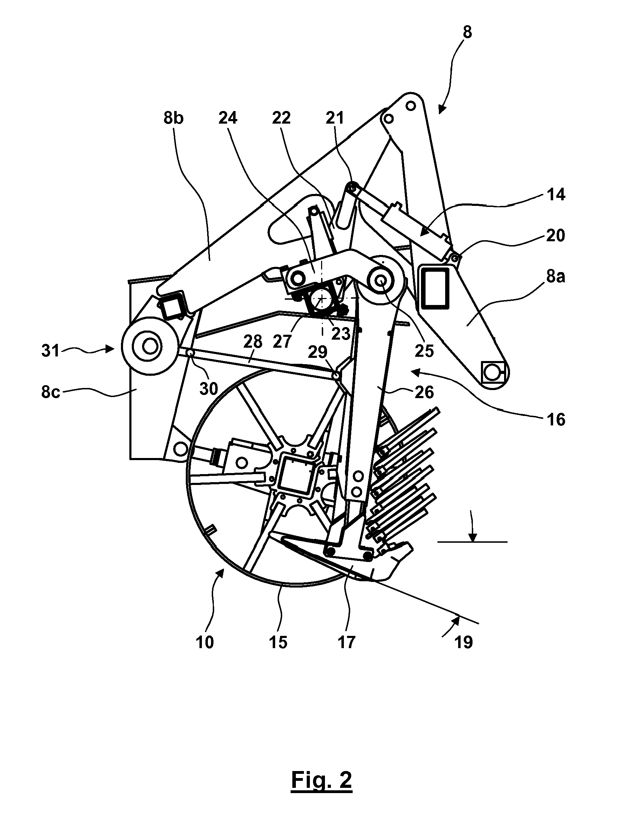

**Fig. 2** zeigt in gegenüber Fig. 1 vergrößerter Darstellung ein Rodeaggregat 16 mit zugeordneter Tastradeinheit 10, welche an einem mit den starr miteinander gekoppelten Bauelementen 8a, 8b, 8c gebildeten Ausleger 8 gehalten sind. Der Aktuator 14 zur Veränderung der Betriebsstellung des Rodeaggregats 16 ist vorzugsweise als einfach oder doppelt wirkender pneumatischer oder hydraulischer Zylinder ausgebildet oder als elektrisches Stellaggregat. Ein Endbereich des Aktuators 14 ist in einem Gelenk 20 an dem Ausleger 8 angelenkt, während der andere Endbereich des Aktuators 14 an einem Gelenk 21 einer Kurbel 22 angelenkt ist, welche starr mit einem Drehachskörper 23 gekoppelt ist, der um eine Drehachse 27 verdrehbar an dem Ausleger 8 gelagert ist. In im Folgenden noch näher spezifizierter Weise ist der Drehachskörper 23 wiederum gekoppelt mit einer Schwinge 24, welche in einem Endbereich über ein Gelenk 25 mit einem Scharträger 26 gekoppelt ist, welcher sich von dem Gelenk 25 in Richtung des Bodens 3 erstreckt. In dem dem Gelenk 25 abgewandten Endbereich ist an dem Scharträger 26 ein Schar 17 befestigt. Zwischen dem Schar 17 und dem Gelenk 25 ist an dem Scharträger 26 eine Pendelstütze 28 über ein Gelenk 29 angekoppelt, deren dem Gelenk 29 abgewandter Endbereich über ein Gelenk 30 mit einem Exzenterantrieb 31 verbunden ist, welcher an dem Ausleger 8, hier dem Bauelement 8c, abgestützt ist. Auf diese Weise bilden der Drehachskörper 23, die Schwinge 24, der Scharträger 26 und die Pendelstütze 28 eine Gliederkette 39, die in den beiden Endbereichen jeweils an dem Ausleger 8 angelenkt ist.

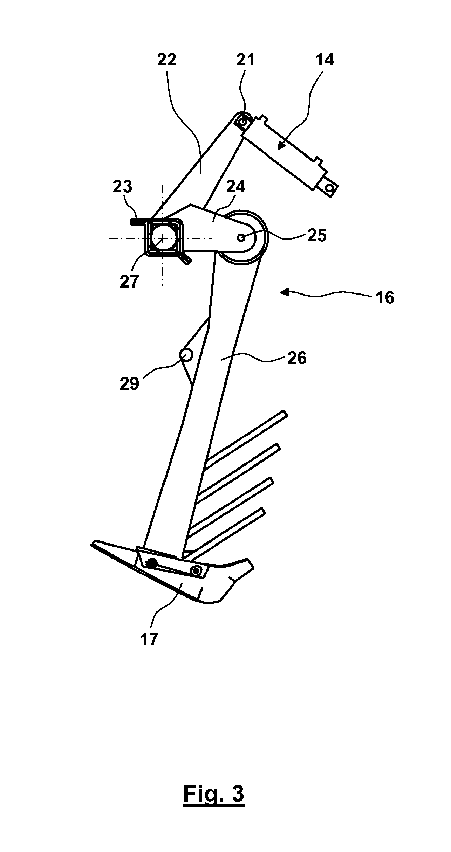

Für das in **Fig. 3** dargestellte Rodeaggregat 16 sind Kurbel 22, Drehachskörper 23 und Schwinge 24 starr miteinander gekoppelt. Dies hat zur Folge, dass eine Veränderung der Schartiefe 18, beispielsweise eine automatische Verringerung der Schartiefe 18 bei Auftreffen auf einen Stein, nicht möglich ist ohne Veränderung der Betriebsstellung des Aktuators 14. Ist hier eine Einfederungsbewegung gewünscht, ist beispielsweise für Ausbildung des Aktuators 14 als Hydraulikzylinder ein hydraulischer, eine Einfederung ermöglichender Speicher in einer mit dem Hydraulikzylinder verbundenen Leitung vorzusehen.

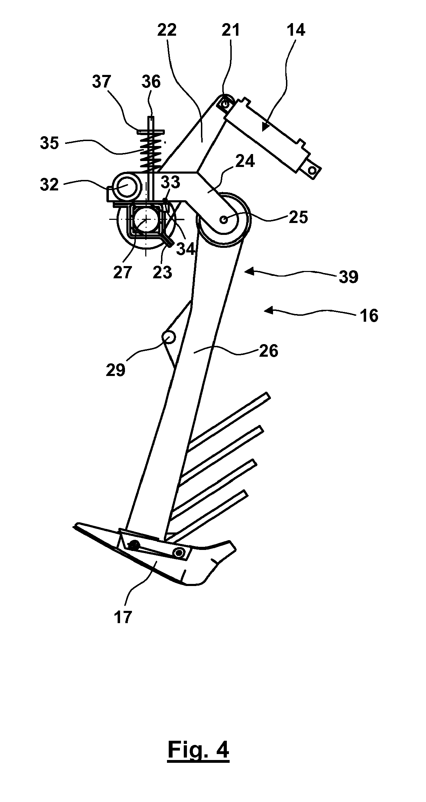

Hingegen ist für das in **Fig. 4** dargestellte Ausführungsbeispiel die Kurbel 22 zwar starr mit dem Drehachskörper 23 gekoppelt. Allerdings besitzt der Drehachskörper 23 beabstandet von seiner Drehachse 27 ein Gelenk 32, in welchem die Schwinge 24 an dem Drehachskörper 23 angelenkt ist. Darüber hinaus bildet der Drehachskörper 23 einen Anschlag 33 aus, an welchem die Schwinge 24 mit einem Gegen-Anschlag 34 in der Betriebsstellung gemäß Fig. 4 anliegt. Der Gegen-Anschlag 34 der Schwinge 24 wird durch ein Federelement 35, hier eine mechanische Druckfeder, gegen den Anschlag 33 des Drehachskörpers 23 beaufschlagt. Als beispielhafte Ausgestaltung gemäß Fig. 4 stützt sich das Federelement 35 mit einem Federfußpunkt auf der Oberseite der Schwinge 24 ab, während sich der andere Federfußpunkt des Federelements 35 an dem Drehachskörper 23, hier an einer sich von dem Drehachskörper 23 durch eine Durchgangsbohrung der Schwinge und das Federelement 35 hindurch erstreckende Abstützstange 36 mit Anschlagelement 37, abstützt. Mit Beaufschlagung des Aktuators 14 in Richtung einer Verlängerung, also mit Verdrehung der Kurbel 22 und des Drehachskörpers 23 entgegen des Uhrzeigersinns in Fig. 4, nimmt über den Kontakt zwischen Anschlag 33 und Gegen-Anschlag 34 der Drehachskörper 23 die Schwinge 24 gegen den Uhrzeigersinn mit, was letztendlich zur Folge hat, dass sich das Gelenk 25 auf einer Teilkreisbahn bewegt mit einer Bewegungskomponente nach oben, welche dann zur Folge hat, dass sich die Schartiefe 18 verringert. Hiermit geht eine Veränderung des Scharwinkels 19 einher, deren Ausmaß durch die kinematischen Verhältnisse, insbesondere die Lage und die Abstände der Drehachse 27 sowie der Gelenke 25, 29, 30, bestimmt ist. Erfolgt hingegen eine Verkürzung des Aktuators 14, hat dies eine Verdrehung der Kurbel 22 und des Drehachskörpers 23 im Uhrzeigersinn gemäß Fig. 4 zur Folge. In diesem Fall nimmt der Drehachskörper 23 die Schwinge 24 lediglich mit, wenn an dem Schar 17 wirkende Kräfte kein Moment an der Schwinge 24 zur Folge haben, welches bewirkt, dass sich entgegen der Beaufschlagung durch das Federelement 35 der Gegen-Anschlag 34 der Schwinge 24 von dem Anschlag 33 des Drehachskörpers 23 lösen kann. Entsprechend ermöglicht das Federelement 35 eine Art Ausgleichsbewegung für übermäßige an dem Schar 17 wirkende Kräfte. Diese Ausgleichsbewegung wird insbesondere genutzt in zeitlicher Umgebung einer Verstellung des Aktuators 14 und/oder für den Fall, dass das Schar 17 auf ein Hindernis, beispielsweise einen Stein oder einen verdichteten oder verhärteten Boden, trifft.

Für die Ausführungsbeispiele gemäß Fig. 2 bis 7 ist der Gelenktrieb mit einer Gliederkette 39 gebildet, deren Glieder in den jeweiligen Zeichenebenen verschwenkt werden, wobei die endseitigen Schwenkachsen der Gliederkette 39 mit der Drehachse 27 und dem Gelenk 30 ortsfest an dem Ausleger 8 angeordnet sind, wobei aber auch möglich ist, dass ein Ende mit dem Gelenk 30 über einen Exzenterantrieb 31 verschwenkt wird.

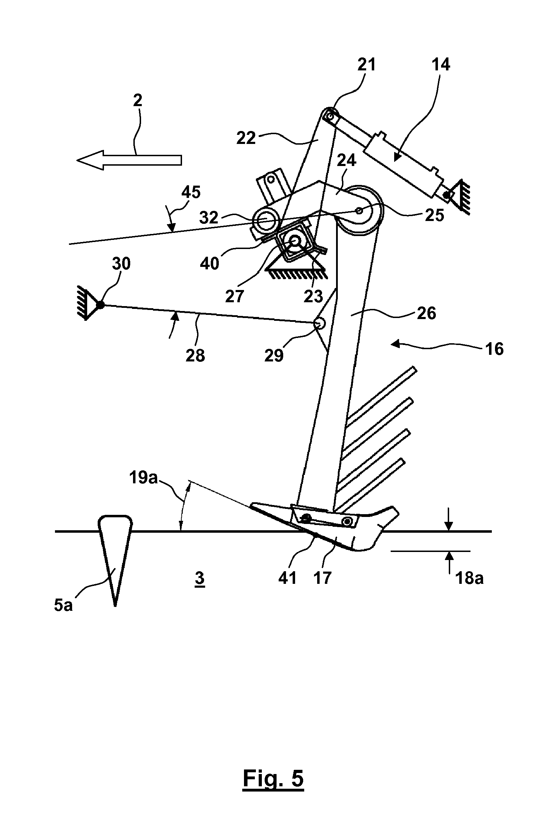

Gemäß Fig. 4 und **Fig. 5** ist ein zusätzliches Glied der Gliederkette 39 ist mit einer Art Kurbel 40 gebildet, welche sich zwischen der Drehachse 27 und einem Gelenk 32 zur Anlenkung der Schwinge 24 erstreckt. Auf die Kurbel 40 wird eine Drehbewegung mittels des Aktuators 14 unter Zwischenschaltung der Kurbel 22 aufgezwungen. Das nächste Glied in der Gliederkette 39 bildet hier die Schwinge 24, welche mit dem ersten Glied über das Gelenk 32 gekoppelt ist, wobei, wie zuvor erläutert, eine Übertragung der Drehbewegung von der Kurbel 40 auf die Kurbel 24 über den Anschlag 33 mit Gegen-Anschlag 34 und zusätzlichem Freiheitsgrad über das Federelement 35 erfolgt. Das dritte Glied der Gliederkette 39 ist gebildet mit dem Scharträger 26, welche über das Gelenk 25 mit der Schwinge 24 gekoppelt ist. Das vierte und letzte Glied der Gliederkette 39 ist gebildet mit der Pendelstütze 28, welche einerseits über das Gelenk 29 mit dem Scharträger 26 gekoppelt ist sowie über das Gelenk 30 mit dem Ausleger 8 oder einem am Ausleger 8 abgestützten Exzenterantrieb 31.

Die Schwinge 24 ist vorzugsweise gekröpft ausgebildet, wie dies in Fig. 5 zu erkennen ist. Das Verhältnis der Länge der einzelnen Glieder der Gliederkette 39, die Winkel-Ausrichtungen der Glieder, die auch durch den Anschlag 33 und den Gegen-Anschlag 34 vorgegeben sind, können den in den Zeichnungen gewählten maßstäblichen Abmessungen entnommen werden, wobei hinsichtlich der aus den Zeichnungen ermittelten Abmessungen auch Abweichungen der Länge und Ausrichtungen von ± 10 %, insbesondere ± 5 % oder 2 % in gleiche oder unterschiedliche Richtungen möglich sind. Um hier lediglich ein Beispiel zu nennen kann Fig. 5 ein Neigungswinkel 45 zwischen der Verbindungsgeraden der Gelenke 32, 25 einerseits und der Pendelstütze 28 andererseits von 12° entnommen werden, so dass auch Neigungswinkel 45 von 12° ± 10 %, insbesondere ± 5 % oder 2 %, als offenbart gelten sollen. Um eine weiteres Beispiel zu nennen, kann das Verhältnis
- der Länge der Schwinge 24, nämlich die Länge der Verbindungsstrecke der Gelenke 25, 32 und
- der Länge der Pendelstütze 28 gemäß Figur 5
gemäß den in Fig. 5 der ursprünglich eingereichten Unterlagen dargestellten Geometrien 5,4 cm / 2,2 cm betragen, wobei auch Verhältnisse von (5,4 cm ± 10 %, insbesondere ± 5 % oder 2 %) / (2,2 cm ± 10 %, insbesondere ± 5 % oder 2 %) als offenbart gelten sollen.

**Fig. 5 bis 7** zeigen die Veränderung des Scharwinkels 19 und der Schartiefe 18 mit einer Beaufschlagung des Aktuators 14 in Form einer Verkürzung der Länge des Aktuators 14, welche mit einer Verschwenkung des Achskörpers 23 im Uhrzeigersinn einhergeht:

Für eine Ausgangsposition gemäß **Fig. 5** mit verhältnismäßig kleiner Schartiefe 18a beträgt der Scharwinkel 19a beispielsweise 24°, wobei der Scharwinkel definiert ist als Winkel zwischen der in Fahrtrichtung 2 weisenden Unterseite 41 des Schars 17 gegenüber der Horizontalen bzw. dem Boden 3.

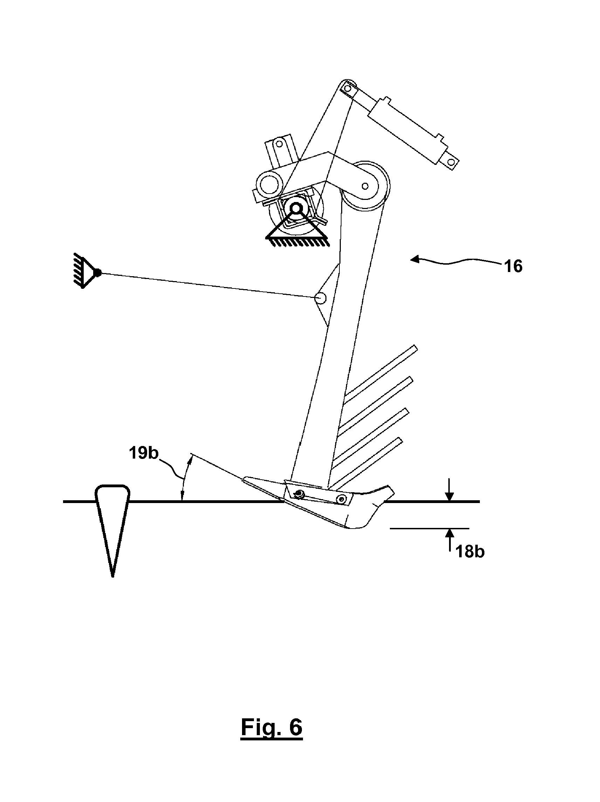

Mit Verkürzung des Aktuators 14 gemäß **Fig. 6** ergibt sich eine gegenüber der Schartiefe 18a vergrößerte Schartiefe 18b, für welche der Scharwinkel 19b 27° beträgt.

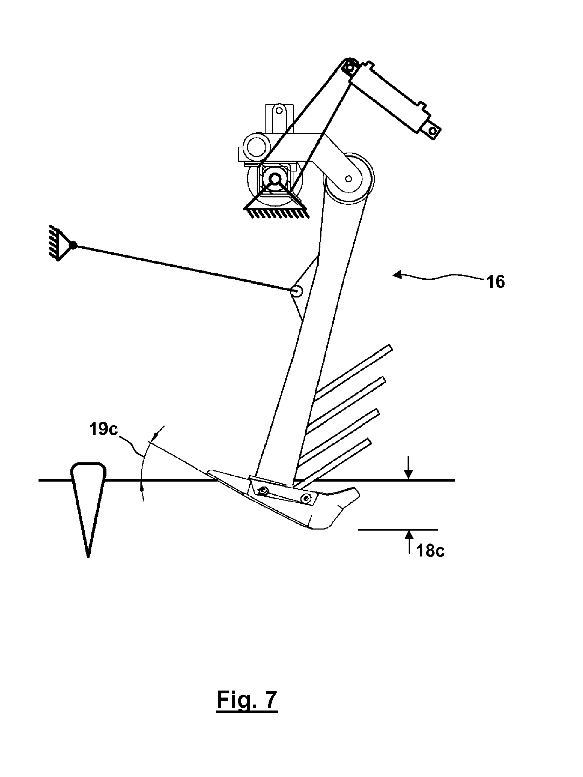

Mit weiterer Verkürzung des Aktuators 14 ergibt sich gemäß **Fig. 7** die noch größere Schartiefe 18c, für welche der Scharwinkel 19c 29° beträgt.

Fig. 5 bis 7 zeigen drei ausgewählte Betriebsstellungen für eine Charakteristik 42 für einen Änderungswinkel 43 des Scharwinkels 19b, 19c gegenüber dem Ausgangs-Scharwinkel 19a über der Änderungs-Schartiefe 44 einer Schartiefe 18b, 18c gegenüber einer Ausgangs-Schartiefe 18a. Hierbei ist die Änderungs-Schartiefe 44 in [mm] angegeben, während der Änderungswinkel 43 in [°] angegeben ist. In der Charakteristik 42 sind somit mit den Punkten (44b, 43b) und (44c, 43c) die Betriebspunkte gemäß Fig. 6 und 7 gekennzeichnet.

Die Charakteristik 42 ist hier kurvenförmig ausgebildet, wobei diese ebenfalls geradlinig gestaltet sein könnte. Die Steigung der Charakteristik 42 nimmt mit sich vergrößernder Änderungs-Schartiefe 44 ab. Für eine Gesamt-Vergrößerung der Schartiefe 18 um ca. 100 Millimeter beträgt die Änderung des Scharwinkels 19 5°. Für eine Änderung der Schartiefe 18 in dem Anfangsbereich der Charakteristik 42 im Bereich von 20 bis 40 Millimeter beträgt die Änderung des Scharwinkels 19 3°, während für größere Werte der Schartiefe mit einer Veränderung der Schartiefe 18 um 40 bis 80 Millimeter die Änderung des Scharwinkels 19 lediglich 2° beträgt.

Vorzugsweise erfolgt über den einzigen Aktuator 14 die gemeinsame Verstellung der Schartiefe 18 und des Scharwinkels 19 für beide Schare 17 des Paares der Schare des Rodeaggregates 16, was insbesondere erfolgt ohne gegenläufige Relativbewegung der beiden Schare 17.

Für eine Weiterbildung der Erfindung, die nicht in den Figuren dargestellt ist, wirkt anstelle oder zusätzlich zu der Feder 35 auf die Schwinge 24 ein Aktuator ein. Durch Betätigung dieses Aktuators kann auf zwei Weisen eine Veränderung der Schartiefe und/oder des Scharwinkels erfolgen, nämlich einerseits durch Verdrehung des Drehachskörpers 23 mittels des Aktuators 14 und andererseits durch Betätigung des zusätzlichen Aktuators, der die relative Lage der Schwinge 24 gegenüber dem Drehachskörper 23 verändert. Hierbei können die beiden genannten Aktuatoren selektiv oder kumulativ betätigt werden. Verfügt der auf die Schwinge 24 einwirkende Aktuator über eine zusätzliche Elastizität, beispielsweise bei Ausbildung als Pneumatikzylinder, kann dieser Aktuator ergänzend eine Einfederungswirkung für die Schartiefe bei Auftreffen des Schars 17 auf ein Hindernis wie einen Stein bereitstellen.

Für die vorangegangene Beschreibung sowie die Formulierung der Patentansprüche wurde davon ausgegangen, dass für die Verstellung der Schartiefe 18 und des Scharwinkels 19 durch den Aktuator 14 die Höhe des Auslegers 8 unverändert bleibt. Es versteht sich, dass durchaus im Betrieb des Rodeaggregats 16 nicht ausschließlich die Ansteuerung des Aktuators 14 und die konstruktiv vorgegebene Charakteristik 42 genutzt wird, um die Schartiefe 18 und den Scharwinkel 19 zu verwenden. Vielmehr ist ebenfalls möglich, dass sowohl die Betätigung des Aktuators 14 zur Nutzung der konstruktiv vorgegebenen Charakteristik 42 mit einer

Überlagerung der Veränderung der Höhe des Auslegers 8 erfolgt. Es versteht sich, dass abweichend zu dem dargestellten Ausführungsbeispiel, unter Umständen entsprechend dem eingangs erläuterten Stand der Technik, zwischen die Gliederkette 39 und den Ausleger 8 weitere, über zusätzliche Aktuatoren verstellbare Traversen oder Modulträger zwischengeordnet sein können, über welche ebenfalls eine Beeinflussung der Schartiefe 18 und/oder des Scharwinkels 19 erfolgen kann.

Um lediglich ein einfaches Beispiel zu nennen, kann für dieselbe Schartiefe 18 ein unterschiedlicher Scharwinkel 19 wie folgt realisiert werden: Ein erster Scharwinkel 19 mit zugeordneter Schartiefe 18 ergibt sich beispielsweise entsprechend der Betriebsstellung gemäß Fig. 2. Mit einem reinen Anheben des Auslegers 8 verringert sich die Schartiefe 18, ohne dass sich der Scharwinkel 19 verändert. Wird die Veränderung der Höhe des Auslegers 8 "ausgeglichen" durch eine entsprechende entgegengesetzte Betätigung des Aktuators 14, verändert sich durch die Betätigung des Aktuators 14 der Abstand des Schars 17 von dem Ausleger 8, womit die Höhenänderung des Auslegers 8 kompensiert werden kann, aber gleichzeitig eine Veränderung des Scharwinkels 19 entsprechend der vorgegebenen Charakteristik 42 erfolgt. Auf diese Weise kann für eine vorgegebene Schartiefe 18 eine Variation des Scharwinkels 19 erfolgen. Es versteht sich, dass entsprechendes möglich ist für weitere zwischen Ausleger 8 und die Gliederkette 39 zwischengeordnete Aktuatoren und Module. Weiterhin möglich sind koordinierte Verstellungen der Höhe des Auslegers 8 oder eines Modulträgers einerseits und die Beaufschlagung des Aktuators 14, um eine gleichzeitige Veränderung der Schartiefe 18 mit einem gewünschten sich ergebenen Scharwinkel 19 herbeizuführen. Vorzugsweise ist für die erläuterten Steuerungs- oder Regelungsmaßnahmen eine geeignete Steuer- oder Regeleinheit vorhanden.

### BEZUGSZEICHENLISTE

- 1: Erntefahrzeug
- 2: Fahrtrichtung
- 3: Boden
- 4: Reihe
- 5: Bodenfrucht
- 6: Grundkörper
- 7: Arbeitszylinder
- 8: Ausleger
- 9: Köpfeinheit
- 10: Tastradeinheit
- 11: Rodeeinheit
- 12: Aktuator
- 13: Aktuator
- 14: Aktuator
- 15: Tastrad
- 16: Rodeaggregat
- 17: Schar
- 18: Schartiefe
- 19: Scharwinkel
- 20: Gelenk
- 21: Gelenk
- 22: Kurbel
- 23: Drehachskörper
- 24: Schwinge
- 25: Gelenk
- 26: Scharträger
- 27: Drehachse
- 28: Pendelstütze
- 29: Gelenk
- 30: Gelenk
- 31: Exzenterantrieb
- 32: Gelenk
- 33: Anschlag
- 34: Gegen-Anschlag
- 35: Federelement
- 36: Abstützstange
- 37: Anschlagelement
- 39: Gliederkette
- 40: Kurbel
- 41: Unterseite
- 42: Charakteristik
- 43: Änderungswinkel
- 44: Änderungs-Schartiefe
- 45: Neigungswinkel

## Patentansprüche

1. Rodeaggregat (16) zum Roden von Wurzelfrüchten, insbesondere Zuckerrüben, mit einem mindestens ein Schar (17) tragenden Scharträger (26) und mit einem Aktuator (14), über welchen eine Schartiefe (18) des Schars (17) verstellbar ist, wobei ein Endbereich des Aktuators (14) in einem Gelenk (20) an einem Ausleger (8) angelenkt ist, während der andere Endbereich des Aktuators (14) an einem Gelenk (21) einer Kurbel (22) angelenkt ist, welche starr mit einem Drehachskörper (23) gekoppelt ist, der um eine Drehachse (27) verdrehbar an dem Ausleger (8) gelagert ist, wobei der Drehachskörper (23) mit einer Schwinge (24) gekoppelt ist, welche in einem Endbereich über ein Gelenk (25) mit dem Scharträger (26) gekoppelt ist, und die Schartiefe (18) und ein Scharwinkel (19) über einen einzigen Aktuator (14) entsprechend einer konstruktiv vorgegebenen Charakteristik (42) für die Abhängigkeit des Scharwinkels (19) von der Schartiefe (18) veränderbar ist, wobei sich mit einer Veränderung einer Schartiefe (18) um einen Millimeter zumindest eine Veränderung des Scharwinkels (19) um 0,015° ergibt.

2. Rodeaggregat (16) nach Anspruch 1, **dadurch gekennzeichnet, dass** die Veränderung des Scharwinkels (19) in Abhängigkeit einer Veränderung der Schartiefe (18) für größere Schartiefen (18c) kleiner ist als für kleinere Schartiefen (18b).

3. Rodeaggregat (16) nach einem der vorhergehenden Ansprüche, **dadurch gekennzeichnet, dass** in dem Stellbereich eine Veränderung einer Schartiefe (18) um einen Millimeter eine maximale Veränderung des Scharwinkels (19) zur Folge hat, die zumindest 0,15° beträgt.

4. Rodeaggregat (16) nach einem der vorhergehenden Ansprüche, **dadurch gekennzeichnet, dass** in dem Stellbereich die gesamte Veränderung des Scharwinkels (19) größer als 4° ist.

5. Rodeaggregat (16) nach einem der vorhergehenden Ansprüche, **dadurch gekennzeichnet, dass** die konstruktiv vorgegebene Charakteristik (42) zwischen Scharwinkel (19) und Schartiefe (18) mit
a) einer über den Aktuator (14) verdrehbaren Schwinge (24),
b) dem Scharträger (26), der verdrehbar in einem Gelenk (25) an der Schwinge (24) angelenkt ist, und
c) einer zwischen dem Gelenk (25) und dem Schar (17) an dem Scharträger (26) angelenkten Pendelstütze (28)
herbeigeführt ist.

6. Rodeaggregat (16) nach Anspruch 5, **dadurch gekennzeichnet, dass** sich der Neigungswinkel (45) der Pendelstütze (28) gegenüber der Schwinge (24) über den Stellbereich um mehr als 15° ändert.

7. Rodeaggregat (16) nach Anspruch 5 oder 6, **dadurch gekennzeichnet, dass** die Länge der Pendelstütze (28) mehr als doppelt so groß wie die Länge der Schwinge (24) ist.

8. Rodeaggregat (16) nach einem der vorhergehenden Ansprüche, **dadurch gekennzeichnet, dass** über den Stellweg der Scharwinkel (19) zwischen 24° und 29° verändert wird.

9. Rodeaggregat (16) nach einem der vorhergehenden Ansprüche, **dadurch gekennzeichnet, dass** für über den Aktuator (14) angesteuerte Schartiefe (18) und Scharwinkel (19) die Schartiefe (18) unter Beaufschlagung eines Federelements (35) in Abhängigkeit von einem Scharwiderstand veränderbar ist.

10. Rodeaggregat (16) nach einem der vorhergehenden Ansprüche, **dadurch gekennzeichnet, dass** die konstruktiv vorgegebene Charakteristik (42) zwischen Scharwinkel (19) und Schartiefe (18) einstellbar.
